# EUROPÄISCHE PATENTSCHRIFT

(11) **EP 0 732 572 B1**
(45) Veröffentlichungstag und Bekanntmachung des Hinweises auf die Patenterteilung: **31.07.2002**
(21) Anmeldenummer: 96810108.9
(22) Anmeldetag: 26.02.1996
(51) Int. Cl.: G01K 13/02

(54) **Hochtemperatursonde**
High temperature sensor
Capteur pour hautes températures

(30) Priorität: 11.03.1995 DE 19508916
(43) Veröffentlichungstag der Anmeldung: 18.09.1996
(73) Patentinhaber: Alstom, 75116 Paris (FR)
(72) Erfinder: Ngo-Beelmann, Ung-Lap, Dr., 76199 Karlsruhe (DE)
(74) Vertreter: Liebe, Rainer

(56) Entgegenhaltungen:
- EP-A- 0 282 216
- DE-A- 2 313 549
- DE-A- 3 319 793
- US-A- 3 245 260

## Beschreibung

### TECHNISCHES GEBIET

Die Erfindung betrifft eine Hochtemperatursonde, wie sie im Oberbegriff des ersten Anspruchs beschrieben ist.

Eine solche Hochtemperatursonde ist z.B. aus der Druckschrift DE-OS-2 413 909 bekannt.

### STAND DER TECHNIK

Beim Betrieb von Gasturbinen ist es meist notwendig, die Temperatur der heissen Verbrennungsgase, die von einigen 100°C bis zu 1550°C betragen kann, zu messen. Zu diesem Zweck sind bereits Hochtemperatursonden vorgeschlagen worden, die in entsprechende Öffnungen am Heissgasgehäuse der Turbine eingesetzt werden können und mit einem Sondenrohr, welches am unteren Ende das eigentliche Messelement enthält, in den Heissgasstrom hineinragen.

So ist aus der Druckschrift US-A-5 180 227 eine optisch arbeitende Hochtemperatursonde bekannt, bei der ein optisches Sensorelement aus Saphir in einem am unteren Ende des Sondenrohres gebildeten Messraum angeordnet ist. Der Messraum ist über eine unterhalb des Sensorelementes angebrachte Einlassöffnung und eine auf der Höhe des Sensorelementes angebrachte Auslassöffnung mit dem umgebenden Heissgasraum verbunden. Das aus dem Heissgasstrom durch die Einlassöffnung eintretende Gas wird aufgrund der Anordnung in dem Messraum abgebremst und umströmt mit sehr geringer Geschwindigkeit das Sensorelement, bevor es durch die Auslassöffnung wieder austritt. Der Messraum wird daher auch als "stagnation chamber" bezeichnet. Die Sonde kann bis zu Temperaturen von 1300°C eingesetzt werden und wird im oberen Teil des Sondenrohres mittels Luft oder einem anderen Gas gekühlt, welches am Sondenflansch zugeführt und kurz oberhalb einer thermischen Barriere wieder herausgelassen wird, die das Sensorelement vom oberen Teil der Sonde trennt.

Weiterhin ist aus der eingangs genannten Druckschrift DE-OS-2 413 909 eine Hochtemperatursonde für den Einsatz in Gasturbinen-Flugzeugmotoren bei Temperaturen bis 800°C bekannt, die mit einem Thermoelement als Temperatursensor arbeitet. Das Thermoelement ist in einem metallumhüllten Kabel mit Mineralisolation in einem Sondenrohr nach unten und durch eine abdichtende Verengung in einen Messraum geführt, sodass der Verbindungspunkt zwischen den beiden Drähten des Thermoelements etwa in der Mitte des Messraumes angeordnet ist. Auch hier ist für den Kontakt mit den zu messenden heissen Gasen eine unterhalb des Verbindungspunktes angebrachte Einlassöffnung und eine oberhalb des Verbindungspunktes angebrachte Auslassöffnung vorgesehen, welche den Messraum mit dem umgebenden Heissgasraum verbinden. Das Heissgas wird somit auch hier durch die Anordnung und Ausbildung der Öffnungen im Messraum gestaut und beruhigt.

Bei den bekannten Sonden wird das zu messende Heissgas im Hinblick auf seine Strömungsgeschwindigkeit stark abgebremst und in nahezu ruhendem Zustand mit dem jeweiligen Sensorelement in Kontakt gebracht. Hierdurch ist der konvektive Wärmeübergang zwischen Gas und Sensorelement herabgesetzt, was sich in einer vergrösserten Zeitkonstante und einer erhöhten Abweichung zwischen tatsächlicher und gemessener Temperatur bemerkbar macht.

### DARSTELLUNG DER ERFINDUNG

Der Erfindung liegt die Aufgabe zugrunde, eine Hochtemperatusonde der eingangs genannten Art dahingehend weiterzuentwikkeln, dass der Wärmeübergang zwischen Gas und Temperatursensor verbessert wird, und eine geeignete Konstruktion einer Temperatursonde für den Einsatz bei Temperaturen bis 1550°C anzugeben.

Erfindungsgemäss wird diese Aufgabe durch die Merkmale des ersten Anspruchs gelöst.

Durch die spezielle Ausgestaltung des Messraums als Strömungskanal, durch welchen die heissen Gase nahezu ungehindert hindurch- und die Sensorspitze umströmen können, wird ein optimaler Wärmeübergang zwischen Gas und Sensorelement erreicht, der zugleich die störenden Nebeneinflüsse wie Wärmeleitung über das Sondenrohr und dgl. verringert.

Eine bevorzugte Ausführungsform der erfindungsgemässen Sonde zeichnet sich dadurch aus, dass der Durchströmkanal seitlich von Wandungen des Sondenrohres begrenzt ist, welche ein Strahlungsschutzschild bilden. Hierdurch können die störenden Einflüsse der Umgebung auf das Messergebnis weiter verringert werden.

Besonders vorteilhaft ist die Herstellung des Sondenrohres aus einer SiC- oder Al₂O₃-Keramik. Weiterhin ist von Vorteil, das in diesem Sondenrohr angeordnete Rohr, welches das Sensorelement umschliesst und im folgenden Sensorrohr genannt wird, aus einer reinen Al₂O₃-Keramik zu fertigen, da bei hohen Temperaturen beispielsweise die Messung mit Thermoelementen nicht durch Al₂O₃ beeinflusst wird. Die genannten Keramiken sind auch bei höheren Temperaturen als die zu messenden thermisch stabil.

Wird das Sondenrohr mittels Montagemitteln durch ein gekühltes Trägerrohr aus einer oxid-dispersionsverfestigten Superlegierung federnd an einem Heissgasgehäuse angeordnet, so wird die Langzeitstabilität der Messanordnung wesentlich verbessert.
Eine solche Superlegierung, die auf Eisenbasis einen hohen Chrom und Aluminiumanteil aufweist, ist beispielsweise verfügbar unter der Bezeichnung PM 2000 bei der PM Hochtemperatur-Metall GmbH (Werkstoffnummer 1.4768).

Unter Verwendung der erwähnten Werkstoffe für das Sonden-, Sensor- und Trägerrohr, weist die Hochtemperatursonde aufgrund hoher Kriech- und sehr guter Oxidations- und Korrosionsbeständigkeit der Materialien eine hohe Lebensdauer auf.

### KURZE BESCHREIBUNG DER ZEICHNUNG

Die Erfindung wird nachfolgend anhand eines Ausführungsbeispiels in der Zeichnung erläutert.
Es zeigen:
- Fig. 1: im Längsschnitt den Aufbau einer Hochtemperatursonde;
- Fig. 2: einen Schnitt durch die Hochtemperatursonde nach der Linie II-II gemäss Fig. 1;
- Fig. 3: einen Schnitt durch die Hochtemperatursonde nach der Linie III-III gemäss Fig. 1;

Es sind nur die für das Verständnis der Erfindung wesentlichen Elemente gezeigt. Strömungsrichtungen der Arbeitsmittel sind mit Pfeilen dargestellt.

### WEG ZUR AUSFÜHRUNG DER ERFINDUNG

Bevor anhand der Zeichnungen die Erfindung näher erläutert wird, sollen zunächst die Arbeitsbedingungen in einer typischen Gasturbine umrissen werden, denen eine Hochtemperatursonde der vorliegenden Art ausgesetzt ist:

| | |
|---|---|
| Wandtemperatur eines Heissgasgehäuses | 900°C |
| Temperatur der Verbrennungsluft im Plenum | 400°C |
| Heissgastemperatur | bis 1550°C |
| Gasdruck | 30 bar |
| Gasgeschwindigkeit | 150 m/s |

Um unter diesen extremen Arbeitsbedingungen, zu denen noch Vibrationen und andere mechanische Belastungen kommen, bei gleichzeitig hoher Langzeitstabilität präzise Messungen der Gastemperatur zu ermöglichen, ist eine spezielle Auslegung der Hochtemperatursonde erforderlich, wie sie anhand eines Ausführungsbeispiels in der Zeichnung erläutert wird.

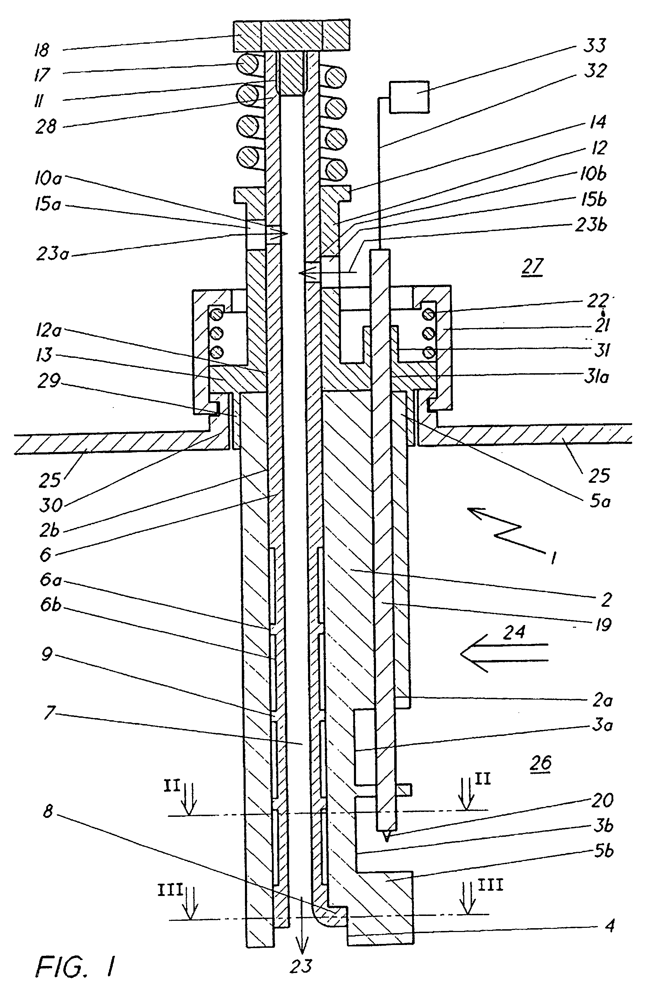

In Fig. 1 ist im Längsschnitt der Aufbau einer Hochtemperatursonde 1 dargestellt, die im wesentlichen aus einem Sondenrohr 2 besteht, mit zwei zur Rohrachse parallel verlaufenden Bohrungen 2a und 2b, in denen ein Sensorrohr 19 und ein Trägerrohr 6 angeordnet sind.

Das Sonden- und das Sensorrohr bestehen aus einer Al₂O₃-Keramik, die temperaturstabil auch oberhalb der zu messenden Heissgastemperatur von bis zu 1550°C ist. Der Werkstoff ist allerdings empfindlich gegen mechanische Belastung, weshalb es konstruktiver Mittel bedarf, um einen Sprödbruch dieser Rohre zu unterbinden.
Bei dem verwendeten Material für das Trägerrohr 6 handelt es sich um eine Superlegierung, die auf Eisenbasis einen hohen Chrom und Aluminiumanteil aufweist, und beispielsweise kommerziell unter der Bezeichnung PM 2000 bei der PM Hochtemperatur-Metall GmbH (Werkstoffnummer 1.4768) erhältlich ist. Dieser Werkstoff hat bei einer Temperatur von 1000°C eine Lebensdauer von 24000 Stunden. Die Superlegierung zeigt bis etwa 1200°C aufgrund der hohen Kriech- und Korrosionsbeständigkeit sehr gute mechanische Eigenschaften, ist aber thermisch nicht so hoch belastbar wie die oben erwähnte Al₂O₃-Keramik. Unter Anwendung einer geeigneten Kühlung, die im folgenden beschrieben wird, werden die guten mechanischen Eigenschaften des Trägerrohrs 6 mit den guten thermischen Eigenschaften des Sondenrohrs 2 ergänzend ausgenutzt.

Die Bohrungen 2a, 2b beginnen an der Spitze 5a des Sondenrohres 2. Dabei verläuft die Bohrung 2b durch das gesamte Sondenrohr 2 und mündet in eine Erweiterungsbohrung 4; die Bohrung 2a endet in einem zweiten Durchströmkanal 3b, der unterhalb eines ersten Durchströmkanals 3a im Bereich des Fusses 5b des Sondenrohres 2 angeordnet ist.
Die Spitze 5a des Sondenrohres 2 ist in einen Rohransatz 29 eines Flansches 13 eingesetzt, der eine Heissgaszone 26 von einem Bereich 27, der im folgenden Plenum genannt wird, trennt.

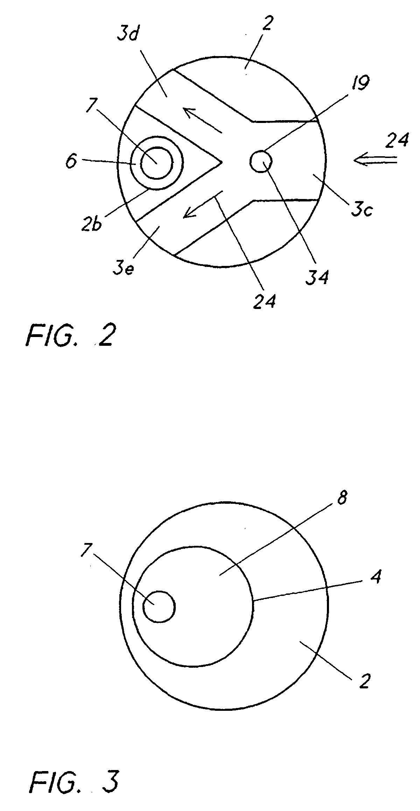

Der Flansch 13 weist an der dem Plenum 27 zugewandten Seite zwei Rohransätze 12 und 31 auf, deren zugehörige Bohrungen 12a und 31a im Flansch 13, den entsprechenden Bohrungen 2a und 2b des Sondenrohres 2 fluchtend gegenüberliegen.
Der Rohransatz 12 schliesst mit einem Flansch 14 ab, und weist unterhalb dieses Flansches 14 Lufteinlassöffnungen 15a und 15b auf.
In dem Rohransatz 12 ist ein Trägerrohr 6 angeordnet, dessen Spitze 28 im Bereich des Plenums 27 mit einem Innengewinde 11 versehen ist. Das Trägerrohr 6 ist durch die Bohrungen 12a und 2a bis zur Erweiterungsbohrung 4 angeordnet und dort, wie Fig. 3 zeigt, mit einem zur Trägerrohrachse exzentrischen Ring 8 abgeschlossen. Im Bereich des Rohransatzes 12 hat das Trägerrohr 6 Lufteinlassöffnungen 10a, b, die den Lufteinlassöffnungen 15a, b des Rohransatzes 12 radial benachbart plaziert sind. Die Lufteinlassöffnungen 10a, b führen zu einer Innenbohrung 7 des Trägerrohres 6, wodurch eine Verbindung in Form eines Strömungskanals für einen Kühlluftstrom 23, 23a, 23b zwischen dem Plenum 27 und der Heissgaszone 26 entsteht.
Im Plenum 27 hat die dort strömende, komprimierte Luft etwa 400°C und weist gegenüber dem Heissgasstrom 24 einen Überdruck von etwa 1 bar auf.
Somit wird das Trägerrohrs 6 von einem Kühlluftstrom 23a, b durchströmt und gekühlt.

Das Trägerrohr 6 weist über seine Länge im Bereich des Sondenrohres 2 einander abwechselnde Aussendurchmesser 6a und 6b auf und bildet dadurch Abstützringe 9 aus, mit denen sich das Trägerrohr gegen die Bohrung 2b des Sondenrohres 2 abstützt. Durch diese Anordnung verringert sich die Kontaktfläche für einen Wärmetransport zwischen Trägerrohr und Sondenrohr. Somit bleibt die zu messende Temperatur des Heissgases weitgehend von dem Kühlluftstrom 23 unbeeiflusst, und das Trägerrohr seinerseits kann auch nur in reduziertem Umfang Wärme vom Sondenrohr 2 aufnehmen.

Eine gestauchte Schraubendruckfeder 17 zwischen einer in das Innengewinde 11 eingedrehten Schraube 18 und dem Flansch 14 hält mittels Federkraft, die über den Ring 8 des Trägerrohres 6 auf das Sondenrohr 2 übertragen wird, die Temperatursonde 1 am Flansch 13 zusammen. Ein Bajonettverschluss 21 mit einer Schraubendruckfeder 22 fixiert den Flansch 13 an der Öffnung 30 einer Heissgasgehäusewand 25, wobei das Sondenrohr 2 in die Heissgaszone 26 eintaucht. Die Befestigung der Temperatursonde 1 erfolgt also ausserhalb des Heissgasgehäuses und erlaubt somit eine Bedienung ohne Demontage des Heissgasgehäuses.
Der Flansch 13 mit den Rohransätzen 12, 29 und 31 ist wegen der guten mechanischen Materialeigenschaften bis 1200°C ebenhergestellt, welche bei einer regulären Temperatur der Heissgasgehäusewand 25 von etwa 900°C ohne gezielte Kühlung angewendet werden kann.

Das Sensorrohr 19 durchquert vom Bereich des Plenums 27 aus den Rohransatz 31, die Bohrung 31a im Flansch 13, die Bohrung 2a im Sondenrohr 2, den Durchströmkanal 3b und endet mit einer Sensorspitze 20 in dem Durchströmkanal 3a. Dabei sind die Durchströmkanäle 3a, b gegen einen Heissgasstrom 24 orientiert.

Fig. 2 zeigt anhand einer Schnittfläche entlang einer Linie II-II in Fig. 1 den Y-förmigen Grundriss der Durchströmkanäle 3a, b. Es zeigt 3c einen Einströmkanal, der gegen den Heissgasstrom 24 orientiert ist, und 3d, e zeigen Ausströmkanäle, die unter einem Winkel zur Richtung des Heissgasstromes seitlich der Bohrung 2b für das Trägerrohr 6 angeordnet sind.

In der Mitte des Einströmkanals 3c ist die Sensorspitze 20 angeordnet; somit bildet der Einströmkanal einen Strahlungsschutzschild gegen Wärmestrahlung, beispielsweise von der Heissgasgehäusewand 25. Das Sensorrohr 19 und die -spitze 20 werden in den Durchströmkanälen 3a, b nahezu ungehindert und ohne Geschwindigkeitsverlust von dem zu messenden Heissgasstrom 24 umströmt. Somit wird schnell und effektiv die Wärme aus dem Heissgasstrom 24 an die Sensorspitze 20 abgegeben, wobei als Sensor hier ein Thermoelement 34 verwendet wird, dass als PtRh-Element vom Typ B mit einem Drahtdurchmesser von etwa 0.5 mm ausgeführt ist. Mit dieser gewählten Anordnung, wird eine Wärmezeitkonstante von τ << 1 s erreicht. Zugleich wird die Differenz zwischen der tatsächlichen und der gemessenen Gastemperatur klein gehalten.

Nicht dargestellt in der Zeichnung ist eine Turbinengehäusedurchführung für die an dem Sensorrohr 19 austretenden Verlängerungsdrähte 32, die mit einem Messwandler 33 verbunden sind.

Selbstverständlich ist die Erfindung nicht auf das gezeigte und beschriebene Ausführungsbeispiel beschränkt.
So ist anstelle des Thermoelements 34 beispielsweise auch ein Saphirthermometer verwendbar.
Weiterhin sind das Sondenrohr 1 und das Sensorrohr 19 in einer anderen Ausführungsvariante auch aus einer SiC-Keramik herstellbar. Die Verwendung einer anderen geeigneten Legierung für das Trägerrohr 6 und den Flansch 13 ist auch denkbar im Sinn der Erfindung.
Auch die Anzahl der Durchströmkanäle 3a, b ist entsprechend der Erfindung nicht auf zwei beschränkt.

### BEZUGSZEICHENLISTE

- 1: Hochtemperatursonde
- 2: Sondenrohr
- 2a: Bohrung für Sensorrohr
- 2b: Bohrung für Trägerrohr
- 3a: Durchströmkanal
- 3b: Durchströmkanal
- 3c: Einströmkanal
- 3d,e: Ausströmkanal
- 4: Erweiterungsbohrung
- 5a: Spitze des Sondenrohrs
- 5b: Fuss des Sondenrohrs
- 6: Trägerrohr
- 6a,b: Aussendurchmesser des Trägerrohrs
- 7: Bohrung
- 8: Ring
- 9: Abstützringe
- 10a,b: Lufteinlassöffnung
- 11: Innengewinde des Trägerrohrs
- 12: Rohransatz
- 12a: Bohrung
- 13: Flansch
- 14: Flansch
- 15a,b: Lufteinlassöffnung
- 17: Schraubendruckfeder
- 18: Schraube
- 19: Sensorrohr
- 20: Sensorspitze
- 21: Bajonettverschluss
- 22: Schraubendruckfeder
- 23: Kühlluftstrom
- 23a,b: Kühlluftstrom
- 24: Heissgasstrom
- 25: Heissgasgehäusewand
- 26: Heissgaszone
- 27: Plenum
- 28: Spitze des Trägerrohrs
- 29: Rohransatz
- 30: Öffnung der Heissgasgehäusewand
- 31: Rohransatz
- 31a: Bohrung
- 32: Verlängerungsdrähte
- 33: Messwandler
- 34: Thermoelement

## Patentansprüche

1. Hochtemperatursonde (1), insbesondere für den Einsatz in einem Heissgasstrom (24) bis ca. 1550°C, bei der ein Sensorrohr (19) in einer Innenbohrung (2a) eines Sondenrohres (2) angeordnet ist, wobei diese Innenbohrung (2a) parallel zur Richtung der Rohrachse verläuft, und bei der die Sensorspitze (20) eines Temperatursensors in einem am unteren Ende des Sondenrohres (2) befindlichen Messraum angeordnet ist, und mit einer Heissgaszone (26), die das Sondenrohr umgibt in Verbindung steht,
**dadurch gekennzeichnet,**
- **dass** der Messraum als ein quer zur Richtung der Sondenrohrachse orientierter Durchströmkanal (3b) für den zu messenden Heissgasstrom (24) ausgebildet ist,
- **dass** das Sondenrohr (2) eine zweite Innenbohrung (2b) parallel zur ersten Innenbohrung (2a) aufweist, in der ein Trägerrohr (6) angeordnet ist, und
- **dass** das Sondenrohr (2) und das Sensorrohr (19) aus einer Keramik bestehen.

2. Hochtemperatursonde nach Anspruch 1,
**dadurch gekennzeichnet,**
**dass** das Sensorrohr (19) mindestens ein Thermoelement oder mindestens ein Thermometer enthält.

3. Hochtemperatursonde nach Anspruch 1,
**dadurch gekennzeichnet,**
**dass** das Trägerrohr (6) aus einer oxid-dispersionsverfestigten(ODS) Superlegierung besteht, und an dem einem Ende in der Heissgaszone (26) einen Ring (8) aufweist, dessen Durchmesser grösser ist als die Bohrung (2b) für das Trägerrohr, und dass der Ring (8) in einer Erweiterungsbohrung (4) am Ende des Sondenrohres (2) angeordnet ist.

4. Hochtemperatursonde nach Anspruch 1,
**dadurch gekennzeichnet,**
**dass** im Bereich der Heissgaszone (26) die Rohrspitze (5a) des Sondenrohres (2) in einen Rohransatz (29) eines Flansches (13) eingesetzt ist, und dass dieser Flansch (13) die Heissgaszone (26) von einem Bereich (27), der Plenum benannt ist, trennt, und dass der Flansch (13) zur Seite des Plenums (27) Bohrungen (12a, 31a) mit Rohransätzen (12, 31) aufweist, durch die das Trägerrohr (6) und das Sensorrohr (19) von der Heissgaszone (26) in das Plenum (27) hineinragen.

5. Hochtemperatursonde nach Anspruch 4,
**dadurch gekennzeichnet,**
**dass** die im Plenum (26) angeordnete Spitze (28) des Trägerrohres (6) ein Innengewinde (11) aufweist, und dass unterhalb des Innengewindes (11) Lufteinlassöffnungen (10a, b) zu einer Bohrung (7) des Trägerrohrs angeordnet sind.

6. Hochtemperatursonde nach Anspruch 5,
**dadurch gekennzeichnet,**
**dass** der Rohransatz (12), der das Trägerrohr (6) umgibt Lufteinlassöffnungen (15a, b) aufweist, die radial neben den Lufteinlassöffnungen (10a, b) des Trägerrohres angeordnet sind, und dass dieser Rohransatz (12) oberhalb der Lufteinlassöffnungen (15a, b) in einem Flansch (14) endet.

7. Hochtemperatursonde nach Anspruch 6,
**dadurch gekennzeichnet,**
**dass** eine Schraubendruckfeder (17) zwischen einer Schraube (18), die in dem Innengewinde (11) des Trägerrohres (6) angeordnet ist, vorgespannt gegen den Flansch (14) gelagert ist.

8. Hochtemperatursonde nach Anspruch 4,
**dadurch gekennzeichnet,**
**dass** der Flansch (13) mit einem Bajonettverschluss (21) im Plenum (27) an einer Öffnung (30) in einer Heissgasgehäusewand (25) befestigt ist.

## Claims

1. High-temperature probe (1), in particular for use in a hot-gas flow (24) up to about 1550°C, in which high-temperature probe (1) a sensor tube (19) is arranged in an inner bore (2a) of a probe tube (2), this inner bore (2a) running parallel to the direction of the tube axis, and in which the sensor tip (20) of a temperature sensor is arranged in a measuring space located at the bottom end of the probe tube (2) and is connected to a hot-gas zone (26) which surrounds the probe tube, **characterized in that** the measuring space is designed as a throughflow passage (3b), orientated transversely to the direction of the probe-tube axis, for the hot-gas flow (24) to be measured, **in that** the probe tube (2) has a second inner bore (2b) parallel to the first inner bore (2a), in which second inner bore (2b) a support tube (6) is arranged, and **in that** the probe tube (2) and the sensor tube (19) are made of a ceramic.

2. High-temperature probe according to Claim 1, **characterized in that** the sensor tube (19) contains at least one thermocouple or at least one thermometer.

3. High-temperature probe according to Claim 1, **characterized in that** the support tube (6) is made of an oxide-dispersion-strengthened (ODS) superalloy and has a ring (8) at the one end in the hot-gas zone (26), the diameter of which ring (8) is greater than the bore (2b) for the support tube, and **in that** the ring (8) is arranged in an enlarged bore (4) at the end of the probe tube (2).

4. High-temperature probe according to Claim 1, **characterized in that**, in the region of the hot-gas zone (26), the tube tip (5a) of the probe tube (2) is inserted into a tubular socket (29) of a flange (13), and **in that** this flange (13) separates the hot-gas zone (26) from a region (27) called the plenum, and **in that** the flange (13), on the side of the plenum (27), has bores (12a, 31a) having tubular sockets (12, 31), through which bores (12a, 31a) the support tube (6) and the sensor tube (19) project from the hot-gas zone (26) into the plenum (27).

5. High-temperature probe according to Claim 4, **characterized in that** the tip (28), arranged in the plenum (26) [sic], of the support tube (6) has an internal thread (11), and **in that** air-inlet openings (10a, b) leading to a bore (7) of the support tube (6) are arranged below the internal thread (11).

6. High-temperature probe according to Claim 5, **characterized in that** the tubular socket (12) which surrounds the support tube (6) has air-inlet openings (15a, b) which are arranged radially next to the air-inlet openings (10a, b) of the support tube, and **in that** this tubular socket (12) ends above the air-inlet openings (15a, b) in a flange (14).

7. High-temperature probe according to Claim 6, **characterized in that** a helical compression spring (17) is mounted in a preloaded manner against the flange (14) between a screw (18) which is arranged in the internal thread (11) of the support tube (6).

8. High-temperature probe according to Claim 4, **characterized in that** the flange (13) is fastened with a bayonet catch (21) in the plenum (27) to an opening (30) in a hot-gas casing wall (25).

## Revendications

1. Sonde pour hautes températures (1), en particulier pour l'utilisation dans un courant de gaz chauds (24) jusqu'à environ 1550°C, dans laquelle un tube de capteur (19) est disposé dans un alésage interne (2a) d'un tube de sonde (2), cet alésage interne (2a) s'étendant parallèlement à la direction de l'axe du tube, et dans laquelle la pointe de capteur (20) d'un capteur de température est disposée dans un espace de mesure se trouvant à l'extrémité inférieure du tube de sonde (2), et qui est en communication avec une zone de gaz chauds (26) qui entoure le tube de sonde,
**caractérisée**
- **en ce que** l'espace de mesure est réalisé en tant que canal d'écoulement (3b) orienté transversalement à la direction de l'axe du tube de sonde, pour le courant de gaz chauds (24) à mesurer,
- **en ce que** le tube de sonde (2) présente un deuxième alésage interne (2b) parallèle au premier alésage interne (2a), dans lequel est disposé un tube de support (6), et
- **en ce que** le tube de sonde (2) et le tube de capteur (19) se composent d'une céramique.

2. Sonde pour hautes températures selon la revendication 1, **caractérisée en ce que** le tube de capteur (19) contient au moins un thermocouple ou au moins un thermomètre.

3. Sonde pour hautes températures selon la revendication 1, **caractérisée en ce que** le tube de support (6) se compose d'un superalliage consolidé par une dispersion d'oxyde (ODS), et présente à une extrémité une bague (8) dans la zone des gaz chauds (26), dont le diamètre est plus gros que l'alésage (2b) pour le tube de support, et **en ce que** la bague (8) est disposée dans un alésage d'élargissement (4) à l'extrémité du tube de sonde (2).

4. Sonde pour hautes températures selon la revendication 1, **caractérisée en ce que**, dans la région de la zone des gaz chauds (26), la pointe du tube (5a) du tube de sonde (2) est insérée dans une extension tubulaire (29) d'une bride (13), et **en ce que** cette bride (13) sépare la zone de gaz chauds (26) d'une zone (27), appelée plénum, et **en ce que** la bride (13) présente, du côté du plénum (27), des alésages (12a, 31a) avec des extensions tubulaires (12, 31), à travers lesquelles le tube de support (6) et le tube de capteur (19) pénètrent depuis la zone de gaz chauds (26) dans le plénum (27).

5. Sonde pour hautes températures selon la revendication 4, **caractérisée en ce que** la pointe (28) du tube de support (6) disposée dans le plénum (27) présente un filetage interne (11) et **en ce qu'**en dessous du filetage interne (11), des ouvertures d'admission d'air (10a, b) sont disposées vers un alésage (7) du tube de support.

6. Sonde pour hautes températures selon la revendication 5, **caractérisée en ce que** l'extension tubulaire (12) qui entoure le tube de support (6) présente des ouvertures d'admission d'air (15a, b) qui sont disposées radialement à côté des ouvertures d'admission d'air (10a, b) du tube de support et **en ce que** cette extension tubulaire (12) se termine au-dessus des ouvertures d'admission d'air (15a, b) par une bride (14).

7. Sonde pour hautes températures selon la revendication 6, **caractérisée en ce qu'**un ressort de pression à boudin (17) est monté entre une vis (18), qui est disposée dans le filetage interne (11) du tube de support (6), de manière précontrainte contre la bride (14).

8. Sonde pour hautes températures selon la revendication 4, **caractérisée en ce que** la bride (13) est fixée avec un emboîtement à baïonnette (21) dans le plénum (27) au niveau d'une ouverture (30) dans une paroi (25) de carter des gaz chauds.
